# EUROPEAN PATENT SPECIFICATION

(11) **EP 3 696 225 B1**
(45) Date of publication and mention of the grant of the patent: **10.11.2021**
(21) Application number: 19157808.7
(22) Date of filing: 18.02.2019
(51) Int. Cl.: C08L 27/06, C09D 127/06

(54) **PLASTISOL COMPOSITION SUITABLE FOR SEALING OF METAL PARTS**
PLASTISOLZUSAMMENSETZUNG ZUM ABDICHTEN VON METALLTEILEN
COMPOSITION DE PLASTISOL APPROPRIÉE POUR SCELLER DES PIÈCES MÉTALLIQUES

(43) Date of publication of application: 19.08.2020
(73) Proprietor: EFTEC NV, 3600 Genk (BE)
(72) Inventor: Martens, Christel, 3500 Sint-Lambrechts-Herk (BE); Andries, Pascal, 6004 JW Weert (NL)
(74) Representative: Hepp Wenger Ryffel AG

(56) References cited:
- WO-A1-92/19662
- DE-A1- 2 123 171
- GB-A- 2 495 776
- US-A- 5 205 963
- Wacker Chemie AG: "CREATING TOMORROW'S SOLUTIONS VINNOL SURFACE COATING RESINS VINYL CHLORIDE COPOLYMERS AND TERPOLYMERS", , 18 July 2005 (2005-07-18), XP055596777, Retrieved from the Internet: URL:https://www.wacker.com/cms/media/publi cations/downloads/5568_EN.pdf [retrieved on 2019-06-14]

## Description

The invention relates to a plastisol composition suitable for sealing of metal parts comprising PVC based polymer, plasticizers, reactive additives based on amino and/or amido-functional compounds and/or blocked polyurethanes. The invention further relates to a process for producing plastisol compositions comprising the steps of polymerizing vinyl chloride and co-monomers and combining them with plasticizers, amino and/or amido-functional compounds and/or blocked polyurethanes.

Plastisols are generally known in the art to be dispersions of organic plastics in plastizicers that may additionally contain auxiliary substances like pigments, fillers, adhesion promoters, foaming aids or stabilizers. The plastisol compositions have the property to gel upon heating to higher temperature and thereafter to cure on cooling. The organic plastic is usually formulated as a pulverulent material to ease the dispersion of the polymer in the presence of the liquid plasticizer. Due to their gelling and curing properties plastisol compositions are widely used as sealing compositions, e. g. for seam seals on metal construction parts / underbodies or as a flange or hem flange seam adhesive in the metal industry, as corrosion protection coatings for metals, e.g. underseals for motor vehicles, for impregnating and coating substrates of textile materials, e.g. as a coating for carpet backing. The desired sealing properties and underbody corrosion protection properties are conferred mainly due to the physical barrier properties and the flexible mechanical properties of the cured plastisol but as well due to their unique flow properties that ensure the almost unlimited applicability of plastisol compositions, e.g. by spray coating, by foaming or by extrusion.

Nevertheless, it is a prerequisite for the performance that good adhesion of the cured plastisol to the substrate is ensured, especially on metal substrates. Therefore, adhesion promoters are often added to the plastisol compositions in order to achieve long-term adhesion of the plastisol on steel, aluminum or galvanized and/or electro coated substrates or otherwise organically pre-treated metal sheets. In this respect polyaminoamides or polyurethanes are used as additives for plastisol compositions based on PVC-type resins.

In GB2495776 is disclosed a plastisol composition comprising pulverulent polymer of polyvinyl chloride or polyacrylate, a plasticiser of a citric acid ester and amino- and/or amido-functional and/or blocked polyurethanes as reactive additives. The composition is said to be curable already at temperatures of 125°C. Such low curing temperatures are desirable. However, the composition disclosed in GB2495776 requires the use of a particular ester, citric acid ester, which leaves little flexibility in the production process. It is a further disadvantage of the described composition that density of the cured plastisol cannot be controlled.

The technical problem is therefore to provide a range of flexible, preferably lightweight, plastisol compositions which are easy to handle, in particular have good aging properties, can be activated at temperatures as low as 120 to 140°C, and show good adhesion to metallic substrates.

The problem is solved by means of a plastisol composition as claimed below. In particular, the problem is solved by a plastisol composition suitable for sealing of metal parts comprising
- 20 to 40 wt% PVC based polymer, comprising
   - a PVC homo-polymer, preferably an emulsion-type PVC homo-polymer, and
   - a suspension-type PVC co-polymer, wherein the copolymer comprises vinyl chloride monomer units and vinyl acetate co-monomer units;
- 20 to 50 wt% of one or more plasticizers, preferably esters;
- 0.5 to 5 wt% of amino and/or amido-functional compounds and/or blocked polyurethane.

The plastisol composition is characterized in that the suspension-type PVC co-polymer comprises at least 10 %, preferably between 11 and 16 %, more preferably between 12 and 14 % vinyl acetate co-monomer units.

By 'sealing' is meant the application of the plastisol composition as a coating, sealing and/or as an adhesive. The plastisol composition can be used for example for seaming seams in metal containers or as a flanged seam adhesive in the metal industry, as corrosion-inhibiting coatings for metals (for example as an undersealing compound for motor vehicles), for impregnating and coating substrates of textile materials (for example as a carpet backing), as cable insulations, etc.

The relative amounts of PVC based polymer (20 to 40 wt-%), plasticizers (20 to 50 wt-%) and amino and/or amido functional compounds (0.5 to 5 wt-%) and blocked polyurethane as outlined above do not add up to 100 wt-% because the plastisol composition in addition comprises additives, such as solvents, fillers, stabilizers, thickeners, humidity absorbers, pigments, adhesion promotors or combinations thereof.

In the context of this invention, a suspension-type PVC copolymer is to be understood as PVC co-polymer resin obtained by suspension polymerization. Suspension polymerisation is a polymerization process that occurs in a monomer droplet. The initiator is soluble in both the liquid phase and the monomer, and is suspended in the liquid phase, converting the droplet to an in particular spherical polymer resin particle. The suspension-type PVC co-polymer resin has a mean particle diameter D₅₀ of 0.8 to 1.2 µm according to ISO 1624:2001.

In the context of this invention, suspension-type PVC co-polymer may also encompass micro-suspension-type PVC co-polymer resin. By the term micro-suspension-type PVC co-polymer is understood the polymer obtained by micro-suspension polymerisation. Micro-suspension polymerisation is a polymerization process where the initiator is soluble in both the solvent and the monomer and where micro-suspension is achieved by mechanical spraying of the monomer. The initiator being mechanically sprayed results in polymer resin particles having a mean diameter D₅₀ of approximately 0.8 to 1.2 µm and following a unimodal, in particular Gaussian, or bimodal distribution.

It is preferred that the suspension-type PVC co-polymer is a resin with a unimodal, in particular Gaussian, particle size distribution. Such a suspension-type PVC is obtained by suspension polymerization rather than micro-suspension polymerisation. The resulting particle size distribution is measured by laser diffraction analysis. The measurement procedure is indicated in the example's section. The unimodal, in particular Gaussian, particle size distribution is in contrast to emulsion-type processes where the distribution is bimodal or multimodal.

In the context of this invention, emulsion-type PVC, also known as pulverulent PVC, is a PVC resin which is obtained by emulsion polymerization. Emulsion polymerization is a polymerization process that includes a nucleation step followed by growth of the nucleus to form latex particles of a mean diameter of typically 0.05 to 10 µm, preferably 0.05µm ≤ D₅₀ ≤ 2µm. The initiator is soluble in the liquid phase. Emulsification occurs in the presence of emulsifier to prevent monomer droplets coalescence. Emulsion-type PVC homo-polymer resin preferably has a multimodal particle size distribution measured by laser diffraction analysis. The measurement procedure is indicated in the example's section. The fine primary particles convey a pulverulent effect and cloudiness.

In the context of this invention, the K-value is a parameter related to viscosity and depending on the mean molecular mass of the polymer, when solvent, solvent concentration and temperature are kept constant. The K-value is determined according to DIN EN ISO 1628-2, using a PVC concentration of 5 g/L (in the absence of insolubles), in cyclohexanone and less than 0.5 wt-% water (stirred at 80°C and allowed to cool down to 25°C). The K-value is measured at 25°C.

Amino- and/or amido-functional compounds and/or blocked polyurethanes are known as adhesion promoters from PVC-type plastisol technology. They considerably improve adhesion properties in the presence of a relevant amount of suspension-type PVC co-polymer composed of vinyl chloride monomer units and vinyl acetate co-monomer units according to this invention. Preferred reactive additives are polyaminoamides based on dimerized fatty acids and low molecular weight di- or polyamines, and/or amino-functional condensation products of epoxides based on the bisglycidyl ether of bisphenol A with diamines or polyamines, such as ethylenediamine, propylenediamine, etc.

Within the invention, the term "plasticizers" denotes organic ester compounds with a molecular weight below 1'000 g/mol that are selected from carboxylate esters, phosphate esters and sulfonate esters. Suitable plasticizers are conventional plasticizers, e.g. C4- to C16-alkyl phthalates, such as dibutyl phthalate, dioctyl phthalate, diheptyl phthalate, benzyl butyl phthalate, dibenzyl phthalate, diisononyl phthalate (DINP), diisodecyl phthalate (DIDP) and diundecyl phthalate (DIUP) as well as known plasticizers from the group consisting of organic phosphates, adipates and sebacates or also benzyl benzoate and other benzoate plasticizers, alkylsulfonic acid esters of phenol or cresol, dibenzyltoluene or di-phenyl ether are suitable. Furthermore, ester compounds of glycerols formed by esterification reaction of glycerols with carboxylic acids, such as acetic acid, propionic acid or butyric acid, can be used as plasticizers. The choice criteria for the plasticizers used depend on the one hand on the polymer composition and on the other hand on the viscosity, the gelling conditions of the plastisol composition and the desired physical properties of a plastisol coated metal part. It is preferred for reasons of health safety that the plastisol compositions according to the invention do not contain more than 1 wt-% of phthalates. Preferred is the use of esters as plasticizers.

The suspension-type PVC co-polymer used in the plastisol composition comprises at least 10% vinyl acetate co-monomer units. It is preferred that the suspension-type PVC co-polymer comprises 11 to 16%, even more preferred 12 to 14% vinyl acetate co-monomer units. The percentage designates the numerical amount of vinyl acetate co-monomer units over the total amount of monomer units in the suspension-type PVC co-polymer.

It is preferred that the amount of vinyl chloride co-monomer units together with the amount of vinyl acetate co-monomer units add up to 95%, preferably to 99%, more preferably to 100% of the PVC based polymer.

A composition as described above has the advantage, that at the one hand it can be cured at low temperatures of higher than 120°C and below 140°C. The compound shows very good adhesion to a metal substrate. This is partly due to the reactive additives based on amino and/or amido-functional compounds and/or blocked polyurethanes. Low curing temperature and good adhesive properties can be achieved due to the choice of PVC and by using a wide range of plasticizers. Furthermore, due to the relatively high amount of vinyl acetate co-monomer units in the suspension-type PVC-co-polymer, the composition readily includes additives as will be explained in more detail below.

The composition as described above has better aging properties than a composition based on emulsion-type PVC only as known in the art. By aging property is meant the increase of viscosity of PVC over time. Slow aging is crucial because, the time between preparation of the plastisol composition and application of the plastisol composition to a substrate in industrial environments is typically three days to three months. The increase is rapid in the beginning and slows down to a quasi-stable value over time. Plastisol compositions based on suspension-type PVC copolymer have shown to age significantly better (i.e. the viscosity increases more slowly) than plastisol compositions based on emulsion-type PVC alone. Aging properties are also affected by production and storage temperatures.

The invention relates to a plastisol composition as described above, wherein the suspension-type PVC co-polymer resin has a mean particle diameter D₅₀ of 0.8 to 1.2 µm according to ISO 1624:2001. For the purposes of this invention, suspension-type PVC co-polymer is preferred over micro-suspension-type PVC co-polymer due to rheology properties, in particular particle size and distribution.

In a preferred embodiment, the suspension-type PVC co-polymer resin used in the plastisol composition has unimodal, in particular Gaussian, particle size distribution.

It is an advantage of the flowability of a plastisol composition containing suspension-type PVC co-polymer resin having preferred particle size and distribution that the plastisol composition can be handled more easily. Flowability is enhanced due to low viscosity of a freshly prepared plastisol composition. There is also a comparatively low viscosity after up to three months of storage.

A further aspect of the invention relates to a plastisol composition as described above, wherein the ratio of PVC homo-polymer to the amount of PVC co-polymer (in wt-%) is between 0.5 and 1.5, and is preferably between 0.8 and 1.2. While emulsion-type polymer resin contributes to the mechanical properties (strength, abrasion resistance) of the plastisol, suspension-type PVC co-polymer resin ensures beneficial rheology effects. The amount of suspension-type PVC co-polymer resin further facilitates miscibility and compatibility with additives. It allows for lower baking temperatures and improves adhesion of the plastisol composition on metal parts. A ratio of PVC homopolymer amount (mass) to suspension-type PVC co-polymer (mass) between 0.5 and 1.5, preferably between 0.8 and 1.2, has proven particularly beneficial.

A further aspect of the invention relates to a plastisol composition as described where the suspension-type PVC co-polymer resin has a K-value of less than 62. Such a K-value can be achieved by choosing a suspension-type PVC co-polymer resin as described above. The K-value is related to the molecular weight of the PVC resin. Generally speaking, large mean particle size of PVC correlates with lower viscosity. A K-value of the suspension-type PVC co-polymer resin in the claimed range has beneficial effects on the aging behaviour of the plastisol composition as well as for its miscibility and receptivity.

A further aspect of the invention relates to a plastisol composition as described above, wherein the plastisol composition additionally comprises additives for lowering the density of the cured plastisol selected from the group consisting of glass balloons, expandable plastic balloons, non-expandable plastic balloons and combinations thereof.

Addition of these additives, also called hollow micro-beads or "microspheres", can be added to the plastisol composition directly in the pre-foamed form or, which is particularly preferred, as a finely divided, non-foamed powder. Preferably, the expandable additives do not expand until the gelling process and thus result in a very uniform and fine-pored foaming. The expandable plastic balloons may comprise a liquid blowing agent based on aliphatic hydrocarbons or fluoro-hydrocarbons as the core and a shell of a co-polymer of acrylonitrile with vinylidene chloride and/or methyl methacrylate and/or methacrylonitrile. If such microspheres are employed, expansion of the micros and therefore foaming may take place during the gelling process of the plastisol. The use of such microspheres is described for example in EP-A-559254. Expandable balloons are commercially available e.g. under the trade name "Expancel" from Nouryon or under the trade name "Dualite" from Lehmann&Voss.

It is an advantage of such additives, that the weight of the applied plastisol is reduced. Such reduced weight is a desirable property, especially in automotive applications, in order to reduce energy consumption, costs and environmental impact.

It has turned out that a composition as described above is particularly suitable for incorporating high amounts of additives designed for lowering the density of the cured plastisol. This is due to the good miscibility and receptivity of suspension-type PVC co-polymer resin for additives e.g. glass or plastic balloons and due to the use of a relatively high amount of vinyl acetate co-monomer units in the suspension-type PVC-co-polymer. The resulting particle size, distribution and viscosity are optimized. For instance, the plastisol composition can incorporate up to 10 wt-% of expandable plastic balloons, preferably 5 to 9 wt-% of expandable plastic balloons. Also, adhesion of the plastisol composition on a metal substrate is improved.

A further aspect of the invention relates to a plastisol composition as described above, wherein the plastizicers comprise 20 to 40 wt% primary plasticizers, preferably esters of dicarboxylic acids.

Primary plasticizers are polar and well compatible with PVC. While primary plasticizers are traditionally phthalate-based, it is preferred that the primary plasticizers used in the plastisol composition according to the invention is derived from dicarboxylic acid. It is an advantage of such primary plasticizers, that they are physically and chemically better incorporated into the PVC co-polymer, less volatile and less prone to migration.

A further aspect of the invention relates to a plastisol composition as described above, wherein in addition to primary plasticizers, the plastisol composition additionally comprises between 2 and 10 wt% of secondary plasticizers, preferably isodecyl benzoate esters.

In contrast to primary plasticizers, secondary plasticizers contain less polar groups. They are less easily soluble and have an even lower tendency to migration. It is an advantage of such secondary plasticizers, especially of isodecyl benzoate esters, that they provide increased strength of the material at reduced temperatures. Secondary plasticizers are only to a limited extent compatible with the polymer. They can, however, be added to adjust viscosity and/or to improve viscosity stability of the plastisol composition.

A further aspect of the invention relates to plastisol composition comprising additives chosen from the group of solvents, fillers, stabilizers, thickeners, humidity absorbers, pigments or combinations thereof. A suitable solvent could be hydrocarbons or isoparaffins. A suitable filler could be calcium carbonate which is chosen for its mechanical properties. A suitable stabilizer could be zinc oxide or magnesium oxide. A suitable thickener could be on silica basis or glycol basis. A suitable humidity absorber could be calcium oxide. A suitable pigment is compatible with the other components und does not interefere with plastisol composition formation. A preferred plastisol composition does not comprise more than 50 wt-% of auxiliary substances and additives, especially not more than 40 wt-% of inorganic particular matter and pigments, e.g. bentones, pyrogenic silicas, titanium dioxide, and not more than 10 Wt.-% of organic solvents, e.g. hydrocarbons.

Depending on the chosen additives the properties of the compound can be flexibly adapted to the needs of the user.

A further aspect of the invention relates to a plastisol composition as described above, wherein the plastisol after curing at temperatures above 120°C but below 140°C has a density of less than 1.20 g/ml, preferably less than 1.0 g/ml, more preferably less than 0.8 g/ml.

Such low weight is a valuable property, especially in automotive applications, in order to reduce energy consumption, costs and environmental impact.

A further aspect of the invention relates to a process for producing a plastisol composition as described above. The method comprises the steps of
- polymerizing vinyl chloride and at least 10 %, preferably at least 12 %, more preferably at least 15 % vinyl acetate in a suspension polymerization;
- providing PVC homo-polymer resin, in particular an emulsion-type PVC homo-polymer resin;
- combining the suspension-type PVC co-polymer with the PVC homo-polymer, in particular the emulsion-type PVC homopolymer, in a weight ratio of PVC homo-polymer to suspension-type PVC co-polymer between 0.5 and 1.5, preferably between 0.8 and 1.1;
- adding the plasticizers and amino and/or amido-functional compounds and/or blocked polyurethanes; and
   optionally
- adding additives for lowering the density of the cured plastisol selected from the group consisting of glass balloons, expandable plastic balloons, non-expandable plastic balloons and combinations thereof.

In the context of this invention, suspension-type PVC co-polymer also encompasses micro-suspension-type PVC co-polymer as described above, although this is not preferred.

A plastisol composition as obtained by the method has turned out particularly suitable to be applied and cured on electro-coated metal parts. The plastisols according to the invention were found to be of superior quality especially for use in the manufacture of automotive parts in order to prevent corrosion. The plastisol compositions are suitable due to their ability to be cured at low temperatures, due to rheology properties and simple processability. The plastisol compositions have excellent aging properties. The plastisols have good mechanical properties even at low temperatures.

In case where additives for lowering the density of the cured plastisol selected from the group consisting of glass balloons, expandable plastic balloons, non-expandable plastic balloons and combinations thereof are added, the composition - in addition to the above listed properties - additionally cures as a light weight coating and/or sealant.

It is preferred that the combination and addition steps of the method are performed at a temperature below 30°C, preferably at a temperature between 15° and 25°C. Such comparatively low process temperatures are beneficial to improve the aging properties of the plastisol composition. It is also preferred that the plastisol composition is stored at temperatures between 10° and 30°C, preferably 15 to 25°C, until use.

The present invention also encompasses a process for the coating of automobile underbodies comprising the steps of providing or producing a plastisol composition as described above and applying such plastisol composition to an automobile underbody and curing said plastisol composition at an object metal temperature above 120 °C but below 140 °C. In order to achieve superior adhesion of the cured plastisol to the metal parts, it is preferred that within one of the processes according to the invention the plastisol composition is applied to electro-coated metal parts, in particular metal panels.

### Example

The following example is intended to explain the invention in more detail. The table lists an exemplary plastisol composition:

| | **Brand** | **Wt-%** |
|---|---|---|
| Emulsion-type PVC homo-polymer resin | Vestolit | 20 |
| Suspension-type PVC co-polymer resin (90:10 vinyl chloride and vinyl acetate) | Innovyn | 15 |
| Dicarboxylic acid ester | ExxonMobil | 30 |
| Isodecyl benzoate ester | Jayflex | 5 |
| Polyamino amides and polyurethanes | Huntsman | 4 |
| Microspheres | Expancel | 7 |
| Filler | Imerys | 10 |
| Solvent | ExxonMobil | 5 |
| Pigment | Evonik | 2 |
| Humidity absorber | OMYA | 2 |

The suspension-type PVC co-polymer' s particle size and distribution were measured by laser diffraction particle sizing. Measurements were performed in a Mastersizer 2000 device by Malvern instruments. The co-polymer resin was dispersed in water (conc.: 0.0615 %Vol) using a Hydro 2000G dispersion unit. The sample was measured under standard conditions applying the following settings: particle RI 1.540; dispersant RI 1.330; absorption: 0.01; analysis model: general; size range: 0.020 to 2000.000µm; weighted residual 0.886%; sensitivity: enhanced, obscuration 14.34%; result emulation:off. The co-polymer had a mean size of 33.858µm (vol.weighted mean D[4,3]). Uniformity of particles was 0.337, with the size distribution being Gaussian. The suspension-type PVC co-polymer resin had a measured K-value of 61. The size distribution of emulsion-type PVC homo-polymer was determined accordingly to confirm a multimodal particle size distribution over the range.

The above listed components were added stepwise and stirred, at a temperature of 20°C (±3°C). Resulting viscositiy of the plastisol composition was low and rheology was optimized. The microspheres were readily and homogeneously suspended in the plastisol composition. The plastisol was used in motor vehicle construction as a coating material. After application, the plastisol was cured at 130°C for 20 min. The cured plastisol had a density of 0.7 g/ml.

## Claims

1. Plastisol composition suitable for sealing of metal parts comprising
- 20 to 40 wt% PVC based polymer, comprising
- a PVC homo-polymer, preferably an emulsion-type PVC homo-polymer, and
- a suspension-type PVC co-polymer, wherein the suspension-type PVC co-polymer comprises vinyl chloride co-monomer units and vinyl acetate co-monomer units;
- 20 to 50 wt% of one or more plasticizers, preferably esters;
- 0.5 to 5 wt% of amino and/or amido-functional compounds and/or a blocked polyurethane;
wherein the suspension-type PVC co-polymer comprises at least 10 %, preferably between 11 and 16 %, more preferably between 12 and 14 % vinyl acetate co-monomer units and wherein the suspension-type PVC co-polymer is a resin with a mean particle diameter D₅₀ of 0.8 to 1.2 µm according to ISO 1624:2001.

2. Plastisol composition according to the preceding claims,
wherein the suspension-type PVC co-polymer is a resin with a unimodal, in particular Gaussian, particle size distribution.

3. Plastisol composition according to any of the preceding claims, wherein the weight ratio of PVC homo-polymer to suspension-type PVC co-polymer is between 0.5 and 1.5, preferably between 0.8 and 1.2.

4. Plastisol composition according to any of the preceding claims, wherein the suspension-type PVC co-polymer has a K-value of less than 62, preferably of K = 58 to 61, more preferably of K = 60, measured according to DIN ISO 1628-2 using a PVC concentration of 5 g/L in the absence of insolubles, in cyclohexanone and less than 0.5 wt-% water, stirred at 80°C and allowed to cool down to 25°C.

5. Plastisol composition according to any of the preceding claims, wherein the plastisol composition additionally comprises additives for lowering the density of the cured plastisol selected from the group consisting of glass balloons, expandable plastic balloons, non-expandable plastic balloons and combinations thereof.

6. Plastisol composition according to any of the preceding claims, wherein the plasticizers comprise
- 20 to 40 wt% primary plasticizers, preferably esters from di-carboxylic acids.

7. Plastisol composition according to any of the preceding claims, wherein the plasticizers additionally comprises
- 2 to 10 wt% secondary plasticizers, preferably isodecyl benzoate esters.

8. Plastisol composition according to any of the preceding claims wherein the plastisol composition comprises additives chosen from the group of solvents, fillers, stabilizers, thickeners, humidity absorbers, pigments, adhesion promoters and combinations thereof.

9. Plastisol composition according to any of claims 5 to 8, wherein the plastisol after curing at temperatures above 120°C but below 140°C has a density of less than 1.20 g/ml, preferably less than 1.0 g/ml, more preferably less than 0.8 g/ml.

10. Process for producing a plastisol composition according to any of claims 1 to 9, comprising the steps of
- polymerizing vinyl chloride and at least 10 %, preferably at least 12 %, more preferably at least 14 % vinyl acetate in suspension polymerization;
- providing a homo-polymer resin, in particular an emulsion-type PVC homo-polymer resin;
- combining the suspension-type PVC co-polymer with the PVC homo-polymer, in particular the emulsion-type PVC homopolymer, in a weight ratio of PVC homo-polymer to suspension-type PVC co-polymer between 0.5 and 1.5, preferably between 0.8 and 1.1;
- adding the plasticizers and amino and/or amido-functional compounds and/or blocked polyurethanes; and
optionally
- adding additives for lowering the density of the cured plastisol selected from the group consisting of glass balloons, expandable plastic balloons, non-expandable plastic balloons and combinations thereof.

11. Process for the coating of automobile underbodies, comprising the steps of providing a plastisol composition according to any of claims 1 to 9 or producing a plastisol composition according to claim 10, and further comprising the steps of:
- applying the plastisol composition to an automobile underbody and curing said plastisol composition at an object metal temperature above 120°C but below 140°C.

12. Process according to claim 11, wherein the plastisol composition is applied to electro coated metal parts.

## Patentansprüche

1. Plastisolzusammensetzung, geeignet zum Versiegeln von Metallteilen, bestehend aus
- 20 bis 40 Gew.-% Polymer auf PVC-Basis, umfassend
- ein PVC-Homopolymer, vorzugsweise ein PVC-Homopolymer vom Emulsionstyp, und
- ein PVC-Copolymer vom Suspensions-Typ, wobei das PVC-Copolymer vom Suspensions-Typ Vinylchlorid-Co-Monomer-Einheiten und Vinylacetat-Co-Monomer-Einheiten aufweist;
- 20 bis 50 Gew.-% eines oder mehrerer Weichmacher, vorzugsweise Ester;
- 0,5 bis 5 Gew.-% amino- und/oder amidofunktionelle Verbindungen und/oder ein blockiertes Polyurethan;
wobei das PVC-Copolymer vom Suspensions-Typ mindestens 10 %, vorzugsweise zwischen 11 und 16 %, noch bevorzugter zwischen 12 und 14 % Vinylacetat-Co-Monomer-Einheiten aufweist und wobei das PVC-Copolymer vom Suspensions-Typ ein Harz mit einem mittleren Teilchendurchmesser D₅₀ von 0,8 bis 1,2 µm gemäß ISO 1624:2001 ist.

2. Plastisol-Zusammensetzung nach einem der vorhergehenden Ansprüche, wobei das PVC-Copolymer vom Suspensions-Typ ein Harz mit einer unimodalen, insbesondere Gauß'schen, Teilchengrößenverteilung ist.

3. Plastisolzusammensetzung nach einem der vorhergehenden Ansprüche, wobei das Gewichtsverhältnis von PVC-Homopolymer zu PVC-Copolymer vom Suspensions-Typ zwischen 0,5 und 1,5, vorzugsweise zwischen 0,8 und 1,2 liegt.

4. Plastisolzusammensetzung nach einem der vorhergehenden Ansprüche, wobei das PVC-Copolymer vom Suspensions-Typ einen K-Wert von weniger als 62, vorzugsweise von K = 58 bis 61, besonders bevorzugt von K = 60, aufweist, gemessen nach DIN ISO 1628-2 unter Verwendung einer PVC-Konzentration von 5 g/L in Abwesenheit von unlöslichen Bestandteilen, in Cyclohexanon und weniger als 0,5 Gew.-% Wasser, gerührt bei 80°C und abgekühlt auf 25°C.

5. Plastisolzusammensetzung nach einem der vorhergehenden Ansprüche, wobei die Plastisolzusammensetzung zusätzlich Additive zur Verringerung der Dichte des gehärteten Plastisols enthält, die aus der Gruppe ausgewählt sind, die aus Glasballons, expandierbaren Kunststoffballons, nicht expandierbaren Kunststoffballons und Kombinationen davon besteht.

6. Plastisolzusammensetzung nach einem der vorhergehenden Ansprüche, wobei die Weichmacher umfassen
- 20 bis 40 Gew.-% primäre Weichmacher, vorzugsweise Ester von Di-Carbonsäuren.

7. Plastisolzusammensetzung nach einem der vorhergehenden Ansprüche, wobei die Weichmacher zusätzlich enthalten
- 2 bis 10 Gew.-% sekundäre Weichmacher, vorzugsweise Isodecylbenzoatester.

8. Plastisolzusammensetzung nach einem der vorhergehenden Ansprüche, wobei die Plastisolzusammensetzung Additive enthält, die ausgewählt sind aus der Gruppe von Lösungsmittel, Füllstoffe, Stabilisatoren, Verdickungsmittel, Feuchtigkeitsabsorber, Pigmente, Haftvermittler und Kombinationen davon.

9. Plastisolzusammensetzung nach einem der Ansprüche 5 bis 8, wobei das Plastisol nach Aushärtung bei Temperaturen über 120°C, aber unter 140°C, eine Dichte von weniger als 1,20 g/ml, vorzugsweise weniger als 1,0 g/ml, besonders bevorzugt weniger als 0,8 g/ml aufweist.

10. Verfahren zur Herstellung einer Plastisolzusammensetzung nach einem der Ansprüche 1 bis 9, umfassend die Schritte
- Polymerisieren von Vinylchlorid und mindestens 10 %, vorzugsweise mindestens 12 %, noch bevorzugter mindestens 14 % Vinylacetat in einer Suspensionspolymerisation;
- Bereitstellung eines Homopolymerharzes, insbesondere eines PVC-Homopolymerharzes vom Emulsionstyp;
- Kombination des PVC-Copolymers vom Suspensions-Typ mit dem PVC-Homopolymer, insbesondere dem PVC-Homopolymer vom Emulsions-Typ, in einem Gewichtsverhältnis von PVC-Homopolymer zu PVC-Copolymer vom Suspensions-Typ zwischen 0,5 und 1,5, vorzugsweise zwischen 0,8 und 1,1;
- Zugabe von Weichmachern und amino- und/oder amidofunktionellen Verbindungen und/oder blockierten Polyurethanen; und
optional:
- Zugabe von Additiven zur Verringerung der Dichte des gehärteten Plastisols, ausgewählt aus der Gruppe bestehend aus Glasballons, expandierbaren Kunststoffballons, nicht expandierbaren Kunststoffballons und Kombinationen davon.

11. Verfahren zur Beschichtung von Automobilunterböden, umfassend die Schritte des Bereitstellens einer Plastisolzusammensetzung nach einem der Ansprüche 1 bis 9 oder des Herstellens einer Plastisol-zusammensetzung nach Anspruch 10, und ferner umfassend die Schritte des:
- Aufbringen der Plastisolzusammensetzung auf einen Automobilunterboden und Aushärten der Plastisolzusammensetzung bei einer Objektmetalltemperatur über 120°C, aber unter 140°C.

12. Verfahren nach Anspruch 11, wobei die Plastisolzusammensetzung auf elektrobeschichtete Metallteile aufgebracht wird.

## Revendications

1. Composition de plastisol convenant au scellement de pièces métalliques comprenant
- 20 à 40 % en poids de polymère à base de PVC, comprenant
- un homopolymère de PVC, de préférence un homopolymère de PVC de type émulsion, et
- un copolymère de PVC de type suspension, dans lequel le copolymère de PVC de type suspension comprend des unités de co-monomère de chlorure de vinyle et des unités de co-monomère d'acétate de vinyle ;
- 20 à 50 % en poids d'un ou plusieurs plastifiants, de préférence des esters ;
- 0,5 à 5 % en poids de composés à fonction amino et/ou amido et/ou d'un polyuréthane bloqué ;
dans laquelle le copolymère de PVC de type suspension comprend au moins 10 %, de préférence entre 11 et 16 %, plus préférablement entre 12 et 14 % d'unités de co-monomère d'acétate de vinyle et dans laquelle le copolymère de PVC de type suspension est une résine avec un diamètre moyen de particule D₅₀ de 0,8 à 1,2 µm selon la norme ISO 1624:2001.

2. Composition de plastisol selon les revendications précédentes, dans laquelle le copolymère de PVC de type suspension est une résine présentant une distribution granulométrique unimodale, notamment gaussienne.

3. Composition de plastisol selon l'une quelconque des revendications précédentes, dans laquelle le rapport pondéral entre l'homopolymère de PVC et le copolymère de PVC de type suspension est compris entre 0,5 et 1,5, de préférence entre 0,8 et 1,2.

4. Composition de plastisol selon l'une quelconque des revendications précédentes, dans laquelle le copolymère de PVC de type suspension a une valeur K inférieure à 62, de préférence de K = 58 à 61, plus préférablement de K = 60, mesurée selon la norme DIN ISO 1628-2 en utilisant une concentration de PVC de 5 g/L en l'absence d'insolubles, dans la cyclohexanone et moins de 0,5 % en poids d'eau, agitée à 80°C et laissée refroidir à 25°C.

5. Composition de plastisol selon l'une quelconque des revendications précédentes, dans laquelle la composition de plastisol comprend en outre des additifs pour abaisser la densité du plastisol durci, choisis dans le groupe constitué par les ballons de verre, les ballons en plastique expansible, les ballons en plastique non expansible et leurs combinaisons.

6. Composition de plastisol selon l'une quelconque des revendications précédentes, dans laquelle les plastifiants comprennent
- 20 à 40 % en poids de plastifiants primaires, de préférence des esters d'acides di-carboxyliques.

7. Composition de plastisol selon l'une quelconque des revendications précédentes, dans laquelle les plastifiants comprennent en outre
- 2 à 10 % en poids de plastifiants secondaires, de préférence des esters de benzoate d'isodécyle.

8. Composition de plastisol selon l'une quelconque des revendications précédentes, dans laquelle la composition de plastisol comprend des additifs choisis dans le groupe des solvants, des charges, des stabilisants, des épaississants, des absorbeurs d'humidité, des pigments, des promoteurs d'adhésion et leurs combinaisons.

9. Composition de plastisol selon l'une quelconque des revendications 5 à 8, dans laquelle le plastisol après durcissement à des températures supérieures à 120°C mais inférieures à 140°C a une densité inférieure à 1,20 g/ml, de préférence inférieure à 1,0 g/ml, plus préférablement inférieure à 0,8 g/ml.

10. Procédé de production d'une composition de plastisol selon l'une quelconque des revendications 1 à 9, comprenant les étapes suivantes
- polymériser chlorure de vinyle et au moins 10 %, de préfénce au moins 12 %, plus préférablement au moins 14 % d'acétate de vinyle en polymérisation en suspension ;
- fournir une résine homopolymère, en particulier une résine homopolymère de PVC de type émulsion ;
- combiner le copolymère de PVC de type suspension avec l'homopolymère de PVC, en particulier l'homopolymère de PVC de type émulsion, dans un rapport pondéral de l'homopolymère de PVC au copolymère de PVC de type suspension compris entre 0,5 et 1,5, de préférence entre 0,8 et 1,1 ;
- ajouter des plastifiants et des composés aminés et/ou amido-fonctionnels et/ou des polyuréthanes bloqués ; et
éventuellement
- ajouter d'additifs pour abaisser la densité du plastisol durci, choisis dans le groupe constitué par les ballons en verre, les ballons en plastique expansible, les ballons en plastique non expansible et leurs combinaisons.

11. Procédé de revêtement de dessous de caisse d'automobile, comprenant les étapes consistant à fournir une composition de plastisol selon l'une quelconque des revendications 1 à 9 ou à produire une composition de plastisol selon la revendication 10, et comprenant en outre les étapes consistant à :
- l'application de la composition de plastisol sur un dessous de caisse d'automobile et le durcissement de ladite composition de plastisol à une température de métal objet supérieure à 120°C mais inférieure à 140°C.

12. Procédé selon la revendication 11, dans lequel la composition de plastisol est appliquée sur des pièces métalliques électrodéposées.
